# EUROPÄISCHE PATENTSCHRIFT

(11) **EP 1 938 092 B1**
(45) Veröffentlichungstag und Bekanntmachung des Hinweises auf die Patenterteilung: **06.07.2011**
(21) Anmeldenummer: 06792348.2
(22) Anmeldetag: 02.10.2006
(51) Int. Cl.: G01N 25/68

(54) **VORRICHTUNG ZUR MESSUNG DER KONDENSATIONSTEMPERATUR EINES GASES**
DEVICE FOR MEASURING THE CONDENSATION TEMPERATURE OF A GAS
DISPOSITIF DESTINE A MESURER LA TEMPERATURE DE CONDENSATION D'UN GAZ

(30) Priorität: 10.10.2005 DE 102005048756
(43) Veröffentlichungstag der Anmeldung: 02.07.2008
(73) Patentinhaber: Vereta GmbH, 37574 Einbeck (DE)
(72) Erfinder: RENGSHAUSEN, Detlef, 37586 Dassel (DE)
(74) Vertreter: Eisenführ, Speiser & Partner
(86) Internationale Anmeldenummer: PCT/EP2006/009526
(87) Internationale Veröffentlichungsnummer: WO 2007/042168

(56) Entgegenhaltungen:
- EP-A2- 0 276 953
- EP-A2- 0 567 813
- JP-A- 2001 161 556
- US-A- 4 407 353
- US-A1- 2005 220 166

## Beschreibung

Die Erfindung betrifft eine Vorrichtung zur Messung der Kondensationstemperatur eines Gases an einer Messstelle, mit einem die Messstelle enthaltenden, durch eine Wand im wesentlichen geschlossenen Prozessraum zur Aufnahme des Gases, mit einer Wärmeableiteinrichtung zur Ableitung von Wärme aus dem Prozessraum derart, dass an der Messstelle die Temperatur des Gases auf den Taupunkt absinkt, und mit einem Temperatursensor. Ferner betrifft die Erfindung die Verwendung eines Wärmerohres und eines Temperatursensors zur Messung der Kondensationstemperatur eines Gases an einer Messstelle.

Im Stand der Technik sind Vorrichtungen zur Messung der Kondensationstemperatur eines Gases bekannt, deren häufigster Verwendungszweck in der Ermittlung der Feuchtigkeit des Gases liegt.

Beispielsweise offenbart die EP 0 567 813 A1 eine Vorrichtung der eingangs genannten Art, bei welcher die Wärmeableiteinrichtung einen wärmeleitfähigen massiven Metallkörper aufweist, der in die den Prozessraum begrenzenden Wand eingesetzt und thermisch von dieser isoliert ist. Dabei ragt dieser Metallkörper mit seinem einen Ende in den Prozessraum und befindet sich mit seinem anderen Ende außerhalb des Prozessraumes. Es sind drei Temperatursensoren vorgesehen, von denen ein erster Temperatursensor mit dem im Prozessraum befindlichen ersten Ende des Metallkörpers und ein zweiter Temperatursensor mit dem zweiten Ende des Metallkörpers verbunden und ein dritter Temperatursensor entfernt vom Metallkörper in den Prozessraum eingesetzt ist. Der erste Temperaturfüller ermittelt den Taupunkt des Gases im Prozessraum am ersten Ende des Metallkörpers, während der zweite Temperatursensor die Temperatur am außerhalb des Prozessraumes liegenden zweiten Ende des Metallkörpers und der dritte Temperatursensor die im Prozessraum herrschende Temperatur misst. Die drei Temperatursensoren sind an eine Auswerteeinrichtung angeschlossen, in der kodierte Informationen gespeichert sind, die dem Temperaturbereich entsprechen, welche an den ersten und zweiten Enden des Metallkörpers und im Kochraum erreicht werden kann, und die auf der Grundlage der drei gemessenen Temperaturen und unter Verwendung der gespeicherten kodierten Informationen den Feuchtigkeitsgehalt des Gases im Prozessraum bestimmt. Ferner ist für die Ableitung der durch den Metallkörper geleiteten Wärme eine Kühleinrichtung zur Kühlung des außerhalb des Prozessraumes liegenden zweiten Endes des Metallkörpers vorgesehen, welche beispielsweise einen Kühlkörper, einen Lüfter und/oder ein ein flüssiges Kühlmedium enthaltendes Kühlelement aufweisen kann. Für die Bestimmung des Feuchtigkeitsgehaltes des Gases durch die Auswerteeinrichtung ist in diesem Zusammenhang die Messung der Temperatur am zweiten Ende des Metallkörpers durch den zweiten Temperatursensor von Bedeutung, weil im Metallkörper von dessen erstem Ende zu dessen zweitem Ende ein Temperaturabfall zu beobachten ist, der im wesentlichen zum einen von den Materialeigenschaften des Metallkörpers und zum anderen von der Wirkung der Kühleinrichtung bestimmt wird. Dieser aufgrund physikalischer Gegebenheiten unvermeintliche Temperaturabfall ist von Nachteil hinsichtlich Aufbau und Wirkungsweise der bekannten Vorrichtung. Denn der Temperaturabfall hat grundsätzlich negative Auswirkungen auf die Genauigkeit des Ergebnisses bei der Bestimmung des Feuchtigkeitsgehaltes. Dieser nachteilige Effekt kann zwar zumindest teilweise durch die Verwendung der drei beschriebenen Temperatursensoren ausglichen werden; jedoch bedingt deren Anordnung einen erhöhten konstruktiven Aufwand, was insbesondere zu höheren Kosten bei der Herstellung und für die Wartung der bekannten Vorrichtung führt, eine stärkere Anfälligkeit im Betrieb insbesondere bei den innerhalb des Prozessraumes angeordneten Temperatursensoren sowie eine kompliziertere Auswertung für die Bestimmung des Feuchtigkeitsgehaltes.

Die bekannte Vorrichtung findet hauptsächlich Verwendung in einem Backofen für Lebensmittel, um die Kondensationstemperatur bzw. den Taupunkt des Wasserdampfes als Funktion des Feuchtigkeitsgehaltes der Luft im Ofenraum zu bestimmen.

Es ist Aufgabe der vorliegenden Erfindung, eine Vorrichtung der eingangs genannten Art mit einer einfacheren, kostengünstigeren und weniger anfälligen Konstruktion zu schaffen, die eine unkomplizierte und gleichwohl genaue Ermittlung der Kondensationstemperatur eines Gases ermöglicht.

Zur Lösung dieser Aufgabe wird gemäß einem ersten Aspekt der Erfindung vorgeschlagen eine Vorrichtung zur Messung der Kondensationstemperatur eines Gases an einer Messstelle, mit einem die Messstelle enthaltenden, durch eine Wand im wesentlichen geschlossenen Prozessraum zur Aufnahme des Gases, mit einer Wärmeableiteinrichtung zur Ableitung von Wärme aus dem Prozessraum derart, dass an der Messstelle die Temperatur des Gases auf den Taupunkt absinkt, und mit einem Temperatursensor, dadurch gekennzeichnet, dass die Wärmeableiteinrichtung ein Wärmerohr aufweist, das mit einem ersten Abschnitt im Prozessraum und mit einem zweiten Abschnitt außerhalb des Prozessraumes angeordnet ist, und der Temperatursensor zur Messung der Temperatur im zweiten Abschnitt des Wärmerohres vorgesehen ist.

Ferner wird gemäß einem zweiten Aspekt der vorliegenden Erfindung vorgeschlagen die Verwendung eines Wärmerohres und eines Temperatursensors zur Messung der Kondensationstemperatur eines Gases an einer Messstelle, dadurch gekennzeichnet, dass das Wärmerohr mit einem ersten Abschnitt innerhalb eines das Gas und die Messstelle enthaltenden und durch eine Wand im wesentlichen geschlossenen Prozessraumes und mit einem zweiten Abschnitt außerhalb des Prozessraumes positioniert und so ausgebildet ist, dass es aus dem Prozessraum Wärme derart ableitet, dass an der Messstelle die Temperatur des Gases auf den Taupunkt absinkt, und der Temperatursensor zur Messung der im Wärmerohr herrschenden Temperatur vorgesehen ist.

Gegenüber dem zuvor erörterten Stand der Technik wird der dort verwendete massive Metallkörper erfindungsgemäß durch ein sog. Wärmerohr ersetzt. Bei einem Wärmerohr, das alternativ auch häufig als "Heatpipe" bezeichnet wird, handelt es sich um ein an sich bekanntes Bauteil, in dem ein flüssiges Arbeitsmedium einem Kreislauf unterworfen wird und nach Art einer Wärmepumpe nacheinander verdampft und wieder kondensiert, um Wärme sehr effizient von einem Ort zu einem anderen zu transportieren. Durch Verwendung eines solchen Wärmerohres nutzt demnach die Erfindung den physikalischen Effekt, dass beim Verdampfen und Kondensieren eines flüssigen Mediums sehr hohe Energiemengen ohne wesentliche Verluste umgesetzt werden. Dadurch ist es möglich, die Wärme von der Messstelle im Prozessraum im wesentlichen verlustfrei aus dem Prozessraum herauszuleiten, so dass das Wärmerohr über seine gesamte Länge im wesentlichen die gleiche Temperatur aufweist. Dadurch wird im Gegensatz zum Stand der Technik im wesentlichen nur noch ein einziger Temperatursensor benötigt, der eine Temperatur misst, die der auf den Taupunkt abgesenkten Temperatur des Gases im Prozessraum an der Messstelle entspricht. Somit ist die Messung der Temperatur im Prozessraum nicht mehr vonnöten, so dass auf die Anordnung eines weiteren Temperatursensors im Prozessraum verzichtet werden kann und somit negative Einflüsse auf die Funktion und Lebensdauer des Temperatursensors aufgrund der im Prozessraum gewöhnlich herrschenden recht rauen Bedingungen ausgeschlossen sind. Die im wesentlichen ideale Temperaturverteilung des Wärmerohres macht aber nicht nur eine Messung des im Prozessraum liegenden ersten Abschnittes des Wärmerohres, sondern auch eine Messung der im Prozessraum herrschenden normalen Temperatur entfernt vom Wärmerohr überflüssig. Neben der Verwendung nur eines einzigen Temperatursensors besteht ein weiterer Vorteil der Verwendung eines Wärmerohres darin, dass aufgrund seiner Fähigkeit, sehr hohe Energiemengen umsetzen zu können, in den meisten Fällen auch auf eine Kühleinrichtung verzichtet werden kann. Da ein Wärmerohr eine etwa 100- bis 1000-fach höhere Wärmemenge als ein Bauteil gleicher geometrischer Abmessungen aus massivem Kupfer transportieren kann, führt schließlich die Verwendung eines Wärmerohres zu einer vorteilhaften Verringerung der Baugröße der Vorrichtung. Dabei ist herausgefunden worden, dass das Wärmerohr bei der erfindungsgemäßen Anwendung gewöhnlich nur einen Durchmesser von wenigen Millimetern aufzuweisen braucht, wodurch sich die aufgenommene Energie reduziert und nicht zuletzt deshalb auf die Anordnung einer Kühleinrichtung in den meisten Fällen verzichtet werden kann.

Die erfindungsgemäße Vorrichtung kann beispielsweise in einem Backofen verwendet werden, um den Wasserdampfgehalt der Luft im Ofenraum zu bestimmen, und zwar für Temperaturen, die oberhalb der Umgebungstemperatur liegen. Dennoch kann die erfindungsgemäße Vorrichtung in beliebigen anderen chemischen Prozessen Anwendung finden und die mit der erfindungsgemäßen Vorrichtung gewonnenen Messergebnisse nicht nur zur Ermittlung zur Feuchtigkeit eines Gases, sondern grundsätzlich auch zur Bestimmung von anderen Parametern eines Gases verwendet werden.

Zwar schlägt die EP 0 276 953 A2 vor, ein Wärmerohr zur Wärmeableitung sowie einen einzigen Temperatursensor zu verwenden, jedoch ist dieser Temperatursensor innerhalb der Kammer angeordnet.

Bevorzugte Ausführungen und Weiterbildungen der Erfindung sind in den abhängigen Ansprüchen angegeben.

Zweckmäßigerweise sitzt der Temperatursensor im wesentlichen direkt am Wärmerohr.

Wie zuvor ausgeführt, kann aufgrund der hohen Wirkungsweise des Wärmerohres in den meisten Fällen auf eine Kühleinrichtung verzichtet werden. Sollte dennoch eine Kühleinrichtung vonnöten sein, so ist diese zur Kühlung des zweiten Abschnittes des Wärmerohres außerhalb des Prozessraumes vorzusehen, wobei in derartigen Fällen gewöhnlich die Kühleinrichtung nur eine relativ geringe Leistung haben muss, da sie ja lediglich unterstützend wirkt, wodurch sie nur eine kleine Bauform benötigt. Die Kühleinrichtung kann mindestens einen am zweiten Abschnitt des Wärmerohres angeordneten Kühlkörper und/oder mindestens einen Lüfter aufweisen.

Zweckmäßigerweise ist das Wärmerohr an einem Abschnitt, mit dem es in der Wand des Prozessraumes positionierbar ist und sich somit durch die Wand erstreckt, mit einem Wärmeisolationskörper versehen, der eine thermische Isolierung zwischen der Wand und dem Wärmerohr herstellt.

Schließlich kann beispielsweise eine Auswerteeinrichtung vorgesehen sein, um die Feuchtigkeit des Gases im Prozessraum aus der vom Temperatursensor gemessenen Temperatur zu ermitteln. Insbesondere zu Beginn eines Prozesses sollte eine Auswertung erst dann stattfinden, wenn die vom Temperatursensor gemessene Temperatur im wesentlichen nicht weiter sinkt. Hierzu wird die Erkenntnis genutzt, dass die ursprünglich für die Kühlung verwendete Energie nach der Entstehung von Tau an der Messstelle nun für die Kondensation und Aufrechterhaltung der Taubildung benötigt wird, was zur Folge hat, dass dann trotzt fortgesetzter Wärmeableitung die Temperatur an dem von der Messstelle gebildeten Ort der Taubildung im wesentlichen nicht weiter sinkt.

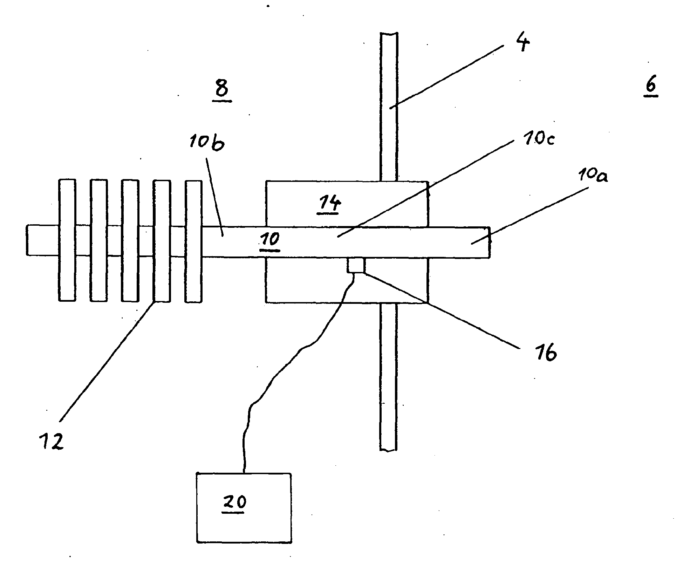

Nachfolgend wird die Erfindung anhand eines bevorzugten Ausführungsbeispiels näher erläutert, das in der beigefügten einzigen Figur schematisch dargestellt ist.

In der beigefügten einzigen Figur ist ein bevorzugtes Ausführungsbeispiel einer erfindungsgemäßen Messvorrichtung 2 gezeigt, die in einer Trennwand 4 zwischen einem Prozessraum 6 und der äußeren Umgebung 8 angeordnet ist. Beim Prozessraum 6, der im wesentlichen geschlossen ist, kann es sich beispielsweise um den Innenraum eines Ofens zur Erhitzung von feuchtem Gut wie z.B. Lebensmitteln handeln. Gleichwohl ist aber auch die Anwendung beliebiger chemischer Prozesse im Prozessraum 6 denkbar, wo die Feuchtigkeit eines im Prozessraum 6 befindlichen Gases eine Rolle spielt, wobei stets ein Temperaturbereich oberhalb der äußeren Umgebungstemperatur relevant ist.

Die Messvorrichtung 2 weist ein sog. Wärmerohr 10 auf, das sich mit ihrem ersten Abschnitt 10a in den Prozessraum 6 erstreckt und mit ihrem gegenüberliegenden zweiten Abschnitt 10b in der äußeren Umgebung 8 befindet. Im Wärmerohr 10, das auch als "Heatpipe" bezeichnet wird, wird ein flüssiges Arbeitsmittel im Kreislauf geführt, das an der heißen Seite, vorliegend im ersten Abschnitt 10a, verdampft und an der kalten Seite, vorliegend im zweiten Abschnitt 10b, kondensiert. Das Wärmerohr 10 weist eine innere kapillare Struktur auf, so dass aufgrund der Kapillarkräfte das Kondensat zurücktransportiert wird. Je feiner die Kapillarstruktur ist, desto größer sind die Kapillarkräfte. Die Wahl des Arbeitsmittels im Wärmerohr richtet sich nach dem Temperaturbereich, in dem Wärme transferiert wird. Gewöhnlich herrscht im Wärmerohr 10 ein Unterdruck, so dass das Arbeitsmittel bereits bei niedrigen Temperaturen verdampft. Somit nutzt das Wärmerohr 10 den physikalischen Effekt, dass beim Verdampfen und Kondensieren einer Flüssigkeit recht hohe Energiemengen umgesetzt werden können. Da es sich beim Wärmerohr 10 um ein bekanntes Bauteil handelt, ist auf eine Darstellung der inneren Struktur in der beiliegenden Figur verzichtet worden.

Im dargestellten Ausführungsbeispiel ist ein Kühlkörper 12 am zweiten Abschnitt 10b des Wärmerohres 10 angeordnet. Da aufgrund seiner hohen Wirkung das Wärmerohr 10 gewöhnlich nur in einer geringen Bauform ausgeführt zu werden braucht und vorzugsweise dessen Durchmesser deshalb in einem Bereich von 3mm liegen kann, ist die vom Wärmerohr 10 aufzunehmende Energie relativ niedrig, so dass man mit einem kleinen Kühlkörper 12 auskommt. In den meisten Fällen kann aber auch auf den Kühlkörper 12 gänzlich verzichtet werden.

Ferner ist das Wärmerohr 10 an einem Abschnitt 10c, mit dem es sich durch die Trennwand 4 erstreckt, mit einem Wärmeisolationskörper 14 versehen, der das Wärmerohr 10 von der Trennwand 4 thermisch isoliert.

Schließlich ist ein Temperatursensor 16 vorgesehen, der im dargestellten Ausführungsbeispiel direkt auf der Mantelfläche des Wärmerohres 10 angebracht ist. Dabei sitzt der Temperatursensor 16 im dargestellten Ausführungsbeispiel innerhalb des Wärmeisolationskörpers 14 außerhalb des Prozessraumes 6 im Bereich der äußeren Umgebung 8. Es ist aber auch grundsätzlich denkbar, den Temperatursensor 16 an jeder beliebigen anderen Stelle anzuordnen, sofern er die Temperatur des Wärmerohres 10 korrekt erfasst, da das Wärmerohr 10 über seine gesamte Länge im wesentlichen die gleiche Temperatur hat. Wegen dieser im wesentlichen idealen Temperaturverteilung des Wärmerohres 10 ist insbesondere eine Anordnung des Temperatursensors 16 außerhalb des Prozessraumes 6 und somit außerhalb der gewöhnlich dort herrschenden rauen Bedingungen vorteilhaft, wobei der Temperatursensor 16 gleichwohl die an dem im Prozessraum 6 liegenden ersten Abschnitt 10a des Wärmerohres 10 herrschende Temperatur korrekt erfasst.

Aufgrund der nahezu verlustlosen Wärmeübertragung durch das Wärmerohr 10 misst somit der Temperatursensor 16 eine Temperatur, die der am ersten Abschnitt 10a des Wärmerohres 10 herrschenden Temperatur entspricht. Wegen der vom Wärmerohr 10 bewirkten Wärmeableitung sinkt die Temperatur am ersten Abschnitt 10a auf den Taupunkt des im Prozessraum 6 befindlichen Gases, so dass am ersten Abschnitt 10a das Gas kondensiert. Demnach bildet der erste Abschnitt 10a des Wärmerohres 10 eine Messstelle für den Taupunkt, und der Temperatursensor 16 misst einen Temperaturwert, der der Temperatur am ersten Abschnitt 10a im Prozessraum 6 entspricht und den Taupunkt des dort befindlichen Gases repräsentiert.

An den Temperatursensor 16 ist eine in der Figur nur schematisch dargestellte Auswerteeinrichtung 20 angeschlossen, die beispielsweise aus der vom Temperatursensor 16 gemessenen Temperatur die augenblickliche Feuchtigkeit des Gases im Prozessraum 6 ermittelt. Dabei sollte zu Beginn eines Prozesses die Auswertung erst dann stattfinden, wenn die vom Temperatursensor 16 gemessene Temperatur im wesentlichen nicht weiter sinkt. Denn die ursprünglich für die Kühlung verwendete Energie nach der Entstehung von Tau am ersten Abschnitt 10a des Wärmerohrs 10 im Prozessraum 6 wird dann für die Kondensation und Aufrechterhaltung der Taubildung benötigt, was zur Folge hat, dass trotz fortgesetzter Wärmeableitung die Temperatur am ersten Abschnitt 10a des Wärmerohres im wesentlichen nicht weiter absinkt.

## Patentansprüche

1. Vorrichtung zur Messung der Kondensationstemperatur eines Gases an einer Messstelle, mit einem die Messstelle enthaltenden, durch eine Wand (4) im wesentlichen geschlossenen Prozessraum (6) zur Aufnahme des Gases, mit einer Wärmeableiteinrichtung (2), die mit einem ersten Abschnitt (10a) im Prozessraum (6) angeordnet und zur Ableitung von Wärme aus dem Prozessraum (6) derart ausgebildet ist, dass an der Messstelle die Temperatur des Gases auf den Taupunkt absinkt, und mit einem Temperatursensor (16), wobei die Wärmeableiteinrichtung (2) ein Wärmerohr (10) aufweist, das mit einem zweiten Abschnitt (10b) außerhalb des Prozessraumes (6) angeordnet ist, **dadurch gekennzeichnet, dass** der Temperatursensor (16) zur Messung der Temperatur im zweiten Abschnitt (10b) des Wärmerohres (10) vorgesehen ist.

2. Vorrichtung nach Anspruch 1,
**dadurch gekennzeichnet, dass** der Temperatursensor (16) am zweiten Abschnitt (10b) des Wärmerohres (10) sitzt.

3. Vorrichtung nach mindestens einem der vorangegangenen Ansprüche,
**gekennzeichnet durch** eine Kühleinrichtung (12) zur Kühlung des zweiten Abschnittes (10b) des Wärmerohres (10).

4. Vorrichtung nach Anspruch 3,
**dadurch gekennzeichnet, dass** die Kühleinrichtung (12) mindestens einen am zweiten Abschnitt (10b) des Wärmerohres (10) angeordneten Kühlkörper aufweist.

5. Vorrichtung nach Anspruch 3 oder 4,
**dadurch gekennzeichnet, dass** die Kühleinrichtung mindestens einen Lüfter aufweist.

6. Vorrichtung nach mindestens einem der vorangegangenen Ansprüche,
**dadurch gekennzeichnet, dass** das Wärmerohr (10) an einem Abschnitt (10c), mit dem es in der Wand (4) des Prozessraumes (6) positionierbar ist, mit einem Wärmeisolationskörper (14) versehen ist.

7. Vorrichtung nach mindestens einem der vorangegangenen Ansprüche,
**gekennzeichnet durch** eine Auswerteeinrichtung (20) zur Ermittlung der Feuchtigkeit des Gases im Prozessraum (6) aus der vom Temperatursensor (16) gemessenen Temperatur.

8. Vorrichtung nach Anspruch 7,
**dadurch gekennzeichnet, dass** die Auswerteeinrichtung (20) zur Ermittlung der Feuchtigkeit des Gases im Prozessraum (6) aus der vom Temperatursensor (16) gemessenen Temperatur nach Feststellung, dass die vom Temperatursensor (18) gemessene Temperatur im Wesentlichen nicht weiter sinkt, eingerichtet ist.

9. Verwendung eines Wärmerohres und eines Temperatursensors zur Messung der Kondensationstemperatur eines Gases an einer Messstelle,
wobei das Wärmerohr (10) mit einem ersten Abschnitt (10a) innerhalb eines das Gas und die Messstelle enthaltenden und durch eine Wand (4) im Wesentlichen geschlossenen Prozessraumes (6) und mit einem zweiten Abschnitt (10b) außerhalb des Prozessraumes (6) positioniert und so ausgebildet ist, dass es aus dem Prozessraum (6) Wärme derart ableitet, dass an der Messstelle die Temperatur des Gases auf den Taupunkt absinkt, und der Temperatursensor (16) zur Messung der Temperatur im zweiten Abschnitt (10b) des Wärmerohres (10) vorgesehen ist.

10. Verwendung eines Wärmerohres und eines Temperatursensors zur Messung der Kondensationstemperatur eines Gases an einer Messstelle nach Anspruch 9,
**dadurch gekennzeichnet, dass** der Temperatursensor (16) am Wärmerohr (10) sitzt.

11. Verwendung eines Wärmerohres und eines Temperatursensors zur Messung der Kondensationstemperatur eines Gases an einer Messstelle nach Anspruch 10,
**dadurch gekennzeichnet, dass** der Temperatursensor (16) am zweiten Abschnitt (10b) des Wärmerohres (10) sitzt.

12. Verwendung eines Wärmerohres und eines Temperatursensors zur Messung der Kondensationstemperatur eines Gases an einer Messstelle nach mindestens einem der Ansprüche 9 bis 11,
**dadurch gekennzeichnet, dass** eine Kühleinrichtung (12) zur Kühlung des zweiten Abschnittes (10b) des Wärmerohres (10) vorgesehen ist.

13. Verwendung eines Wärmerohres und eines Temperatursensors zur Messung der Kondensationstemperatur eines Gases an einer Messstelle nach Anspruch 12,
**dadurch gekennzeichnet, dass** die Kühleinrichtung (12) mindestens einen am zweiten Abschnitt (10b) des Wärmerohres (10) angeordneten Kühlkörper aufweist.

14. Verwendung eines Wärmerohres und eines Temperatursensors zur Messung der Kondensationstemperatur eines Gases an einer Messstelle nach Anspruch 12 oder 13,
**dadurch gekennzeichnet, dass** die Kühleinrichtung mindestens einen Lüfter aufweist.

15. Verwendung eines Wärmerohres und eines Temperatursensors zur Messung der Kondensationstemperatur eines Gases an einer Messstelle nach mindestens einem der Ansprüche 9 bis 14,
**dadurch gekennzeichnet, dass** das Wärmerohr (10) an einem Abschnitt (10c), mit dem des in der Wand (4) des Prozessraumes (6) positionierbar ist, mit einem Wärmeisolationskörper (14) versehen ist.

## Claims

1. Device for measuring the condensation temperature of a gas at a measuring point, with a process chamber (6), which contains the measuring point and is substantially closed by a wall (4), to receive the gas, with a heat extraction mechanism (2), which is arranged with a first portion (10a) in the process chamber (6) and is configured to extract heat from the process chamber (6) in such a way that the temperature of the gas at the measuring point drops to the dew point, and with a temperature sensor (16), wherein the heat extraction mechanism (2) has a heat tube (10), which is arranged with a second portion (10b) outside the process chamber (6), **characterised in that** the temperature sensor (16) is provided to measure the temperature in the second portion (10b) of the heat tube (10).

2. Device according to claim 1, **characterised in that** the temperature sensor (16) is seated on the second portion (10b) of the heat tube (10).

3. Device according to at least any one of the preceding claims, **characterised by** a cooling mechanism (12) for cooling the second portion (10b) of the heat tube (10).

4. Device according to claim 3, **characterised in that** the cooling mechanism (12) has at least one cooling body arranged on the second portion (10b) of the heat tube (10).

5. Device according to claim 3 or 4, **characterised in that** the cooling mechanism has at least one fan.

6. Device according to at least any one of the preceding claims, **characterised in that** the heat tube (10) is provided on a portion (10c), with which it can be positioned in the wall (4) of the process chamber (6), with a heat insulation body (14).

7. Device according to at least any one of the preceding claims, **characterised by** an evaluation mechanism (20) to determine the moisture of the gas in the process chamber (6) from the temperature measured by the temperature sensor (16).

8. Device according to claim 7, **characterised in that** the evaluation mechanism (20) is set up to determine the moisture of the gas in the process chamber (6) from the temperature measured by the temperature sensor (16) after determining that the temperature measured by the temperature sensor (16) substantially does not drop further.

9. Use of a heat tube and a temperature sensor to measure the condensation temperature of a gas at a measuring point, wherein the heat tube (10) is positioned with a first portion (10a) within a process chamber (6) containing the measuring point and substantially closed by a wall (4) and with a second portion (10b) outside the process chamber (6), and is configured in such a way that it extracts heat from the process chamber (6) in such a way that the temperature of the gas at the measuring point drops to the dew point, and the temperature sensor (16) is provided to measure the temperature in the second portion (10b) of the heat tube (10).

10. Use of a heat tube and a temperature sensor for measuring the condensation temperature of a gas at a measuring point according to claim 9, **characterised in that** the temperature sensor (16) is seated on the heat tube (10).

11. Use of a heat tube and a temperature sensor for measuring the condensation temperature of a gas at a measuring point according to claim 10, **characterised in that** the temperature sensor (16) is seated on the second portion (10b) of the heat tube (10).

12. Use of a heat tube and a temperature sensor for measuring the condensation temperature of a gas at a measuring point according to at least any one of claims 9 to 11, **characterised in that** a cooling mechanism (12) is provided to cool the second portion (10b) of the heat tube (10).

13. Use of a heat tube and a temperature sensor to measure the condensation temperature of a gas at a measuring point according to claim 12, **characterised in that** the cooling mechanism (12) has at least one cooling body arranged on the second portion (10b) of the heat tube (10).

14. Use of a heat tube and a temperature sensor for measuring the condensation temperature of a gas at a measuring point according to claim 12 or 13, **characterised in that** the cooling mechanism has at least one fan.

15. Use of a heat tube and a temperature sensor for measuring the condensation temperature of a gas at a measuring point according to at least any one of claims 9 to 14, **characterised in that** the heat tube (10) is provided on a portion (10c), with which it can be positioned in the wall (4) of the process chamber (6), with a heat insulation body (14).

## Revendications

1. Dispositif destiné à mesurer la température de condensation d'un gaz en un point de mesure, comprenant une chambre de processus (6) contenant le point de mesure, sensiblement fermée par une paroi (4), destinée à la réception du gaz, un dissipateur de chaleur (2) disposé par une première section (10a) dans la chambre de processus (6) et réalisé pour dissiper la chaleur de la chambre de processus (6) de telle manière qu'au niveau du point de mesure, la température du gaz diminue jusqu'au point de condensation, et un capteur de température (16), le dissipateur de chaleur (2) présentant un tube échangeur de chaleur (10) disposé par une seconde section (10b) en dehors de la chambre de processus (6),
**caractérisé en ce que** le capteur de température (16) est prévu pour mesurer la température dans la seconde section (10b) du tube échangeur de chaleur (10).

2. Dispositif selon la revendication 1,
**caractérisé en ce que** le capteur de température (16) loge sur la seconde section (10b) du tube échangeur de chaleur (10).

3. Dispositif selon au moins l'une quelconque des revendications précédentes,
**caractérisé par** un dispositif de refroidissement (12) destiné à refroidir la seconde section (10b) du tube échangeur de chaleur (10).

4. Dispositif selon la revendication 3,
**caractérisé en ce que** le dispositif de refroidissement (12) présente au moins un corps de refroidissement disposé sur la seconde section (10b) du tube échangeur de chaleur (10).

5. Dispositif selon la revendication 3 ou 4,
**caractérisé en ce que** le dispositif de refroidissement présente au moins un ventilateur.

6. Dispositif selon au moins l'une quelconque des revendications précédentes,
**caractérisé en ce que** le tube échangeur de chaleur (10) est pourvu d'un corps calorifuge (14) sur une section (10c), avec laquelle il peut être positionné dans la paroi (4) de la chambre de processus (6).

7. Dispositif selon au moins l'une quelconque des revendications précédentes,
**caractérisé par** un dispositif d'évaluation (20) destiné à déterminer l'humidité du gaz dans la chambre de processus (6) à partir de la température mesurée par le capteur de température (16).

8. Dispositif selon la revendication 7,
**caractérisé en ce que** le dispositif d'évaluation (20) est aménagé pour déterminer l'humidité du gaz dans la chambre de processus (6) à partir de la température mesurée par le capteur de température (16) après constatation que la température mesurée par le capteur de température (16) ne continue pas sensiblement à diminuer.

9. Utilisation d'un tube échangeur de chaleur et d'un capteur de température destiné à mesurer la température de condensation d'un gaz en un point de mesure,
sachant que le tube échangeur de chaleur (10)
est positionné par une première section (10a), dans une chambre de processus (6) contenant le gaz ainsi que le point de mesure et fermée sensiblement par une paroi (4), et par une seconde section (10b) en dehors de la chambre de processus (6)
et est réalisé de sorte à dissiper la chaleur de la chambre de processus (6) de telle manière qu'au niveau du point de mesure, la température du gaz diminue jusqu'au point de condensation,
le capteur de température (16) destiné à mesurer la température étant prévu dans la seconde section (10b) du tube échangeur de chaleur (10).

10. Utilisation d'un tube échangeur de chaleur et d'un capteur de température destiné à mesurer la température de condensation d'un gaz en un point de mesure selon la revendication 9,
**caractérisée en ce que** le capteur de température (16) loge sur le tube échangeur de chaleur (10).

11. Utilisation d'un tube échangeur de chaleur et d'un capteur de température destiné à mesurer la température de condensation d'un gaz en un point de mesure selon la revendication 10,
**caractérisée en ce que** le capteur de température (16) loge sur la seconde section (10b) du tube échangeur de chaleur (10).

12. Utilisation d'un tube échangeur de chaleur et d'un capteur de température destiné à mesurer la température de condensation d'un gaz en un point de mesure selon au moins l'une quelconque des revendications 9 à 11,
**caractérisée en ce qu'**un dispositif de refroidissement (12) est prévu pour le refroidissement de la seconde section (10b) du tube échangeur de chaleur (10).

13. Utilisation d'un tube échangeur de chaleur et d'un capteur de température destiné à mesurer la température de condensation d'un gaz en un point de mesure selon la revendication 12,
**caractérisée en ce que** le dispositif de refroidissement (12) présente au moins un corps de refroidissement disposé sur la seconde section (10b) du tube échangeur de chaleur (10).

14. Utilisation d'un tube échangeur de chaleur et d'un capteur de température destiné à mesurer la température de condensation d'un gaz en un point de mesure selon la revendication 12 ou 13,
**caractérisée en ce que** le dispositif de refroidissement présente au moins un ventilateur.

15. Utilisation d'un tube échangeur de chaleur et d'un capteur de température destiné à mesurer la température de condensation d'un gaz en un point de mesure selon au moins l'une quelconque des revendications 9 à 14,
**caractérisée en ce que** le tube échangeur de chaleur (10) est pourvu d'un corps calorifuge (14) sur une section (10c), avec laquelle il peut être positionné dans la paroi (4) de la chambre de processus (6).
